# EUROPEAN PATENT SPECIFICATION

(11) **EP 2 848 157 B1**
(45) Date of publication and mention of the grant of the patent: **20.07.2016**
(21) Application number: 14183310.3
(22) Date of filing: 03.09.2014
(51) Int. Cl.: A47B 13/02, F16B 12/44

(54) **Joining system for the production of a tubular frame structure with legs for supporting planes**
Verbindungssystem zur Herstellung einer rohrförmigen Rahmenstruktur mit Beinen für Stützflächen
Système d'assemblage pour la production d'une structure de cadre tubulaire avec des pieds destinés à supporter les plateaux

(30) Priority: 13.09.2013 IT MI20131515; 18.10.2013 IT MI20131740
(43) Date of publication of application: 18.03.2015
(73) Proprietor: Leonardo S.r.L., 22060 Figino Serenza - Como - (IT)
(72) Inventor: Cattaneo, Carlo, 22060 Figino Serenza (IT)
(74) Representative: Martegani, Franco

(56) References cited:
- EP-A1- 0 847 715
- WO-A2-2013/110432

## Description

The present invention relates to a joining system for the production of a tubular frame structure, made of metal, with legs, also metallic, for supporting planes, such as, for example, tables, desks and similar furniture components.

The invention also relates to a structure comprising said joining system.

Joining systems of the known type for producing a tubular metal frame structure, with legs, also metallic, for supporting planes, are described, for example, in European patent EP0633741 and in Italian patents IT1285997, IT1301959, IT 1324124 and IT 1324125.

The joining systems of the known art, in addition to being extremely expensive to produce, have the drawback of requiring special processings at the ends of the structure on which the junction must be assembled for connection to the relative leg, and also being cumbersome.

Furthermore, the systems of the known art are not particularly flexible; i.e. they do not allow the use of standard metal tubes - available on the market - to be simply cut to size, depending on the dimensions of the article to be produced, as, on the other hand, is greatly requested.

Document EP847715 of the same applicant shows a solution according to the preamble of claim 1.

The general objective of the present invention is to provide a joining system which is particularly economical, with reduced dimensions and with an extremely flexible use, thanks to the use of metal pipes substantially available on the market.

This objective is achieved by a joining system having the characteristics specified in claim 1 and enclosed dependent claims.

The structural and functional characteristics of the invention, as also its advantages with respect to the known art, will appear evident from the following description, referring to the enclosed drawings, which illustrate embodiment examples of the invention itself.

In the drawings:
- figure 1 is an exploded perspective view, illustrating a first embodiment of a joining system produced according to the invention;
- figure 2 is a partially exploded perspective view, illustrating a tubular frame structure with legs, comprising the joining system of figure 1;
- figure 3 is a plan view of the structure of figure 2;
- figure 4 is an enlarged section taken according to the line IV-IV of figure 3;
   figure 5 is an enlarged section taken according to the the line V-V of figure 3;
- figures 6-10 are views similar to figures 1-5, respectively, but illustrating a second embodiment of the invention;
- figures 11-15 are views similar to figures 1-5 and 6-10, respectively, but illustrating a third embodiment of the invention;
- figures 16-20 are views similar to figures 1-5, 6-10, 11-15, respectively, illustrating a fourth embodiment of the invention; and
- figures 21-25 are views similar to figures 1-5, 6-10, 11-15, and 16-20, respectively, illustrating a fifth embodiment of the invention;

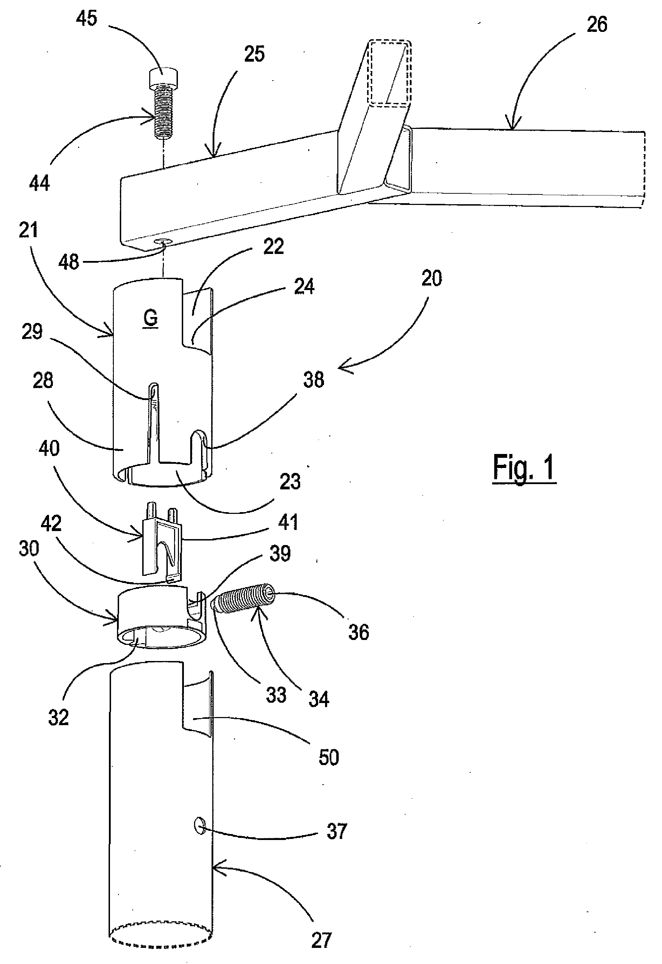

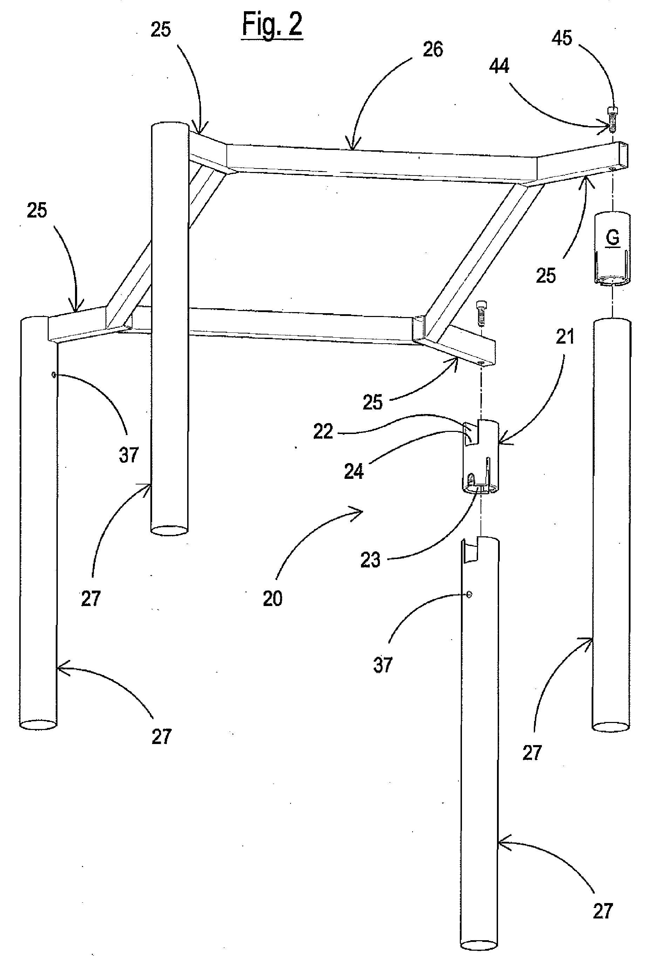

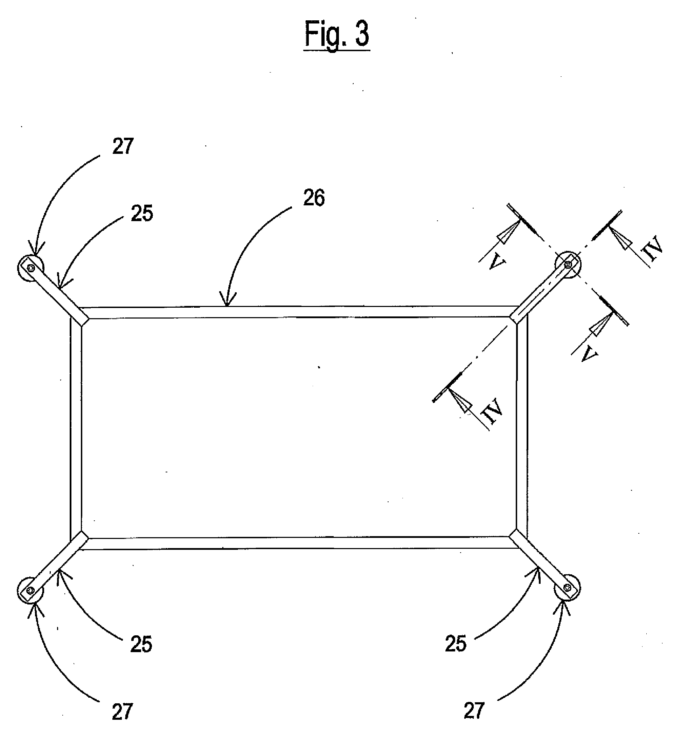

With reference first of all to figures 1-5 of the drawings, 20 indicates as a whole a joining system produced according a first possible embodiment of the invention.

Said system 20 comprises a joining system G, with a substantially cylindrical body 21, for example, with two hollow sections 22, 23, upper and lower respectively, and said sections 22 and 23 contain first and second fixing means, respectively, of the joining element G, to a metal frame 26 and to a metal leg 27, respectively. Said body 21 can also have a plan section which is rectangular, square, or having another polygonal form, depending on the section of the leg 27 in which the same must be inserted and housed.

As can be clearly seen from the drawings, the upper or top section 22 is rectangular and defines a cradle seat 24 suitable for receiving a shank 25, having a corresponding section, with a tubular metal frame structure 26 with legs 27.

The lower section 23, on the contrary, consists of a casing 28, for example cylindrical, which can be expanded thanks to presence of notches 29 along generatrices. Said casing 28 can also have a rectangular, square or other polygonal plan section, depending on the section of the leg 27.

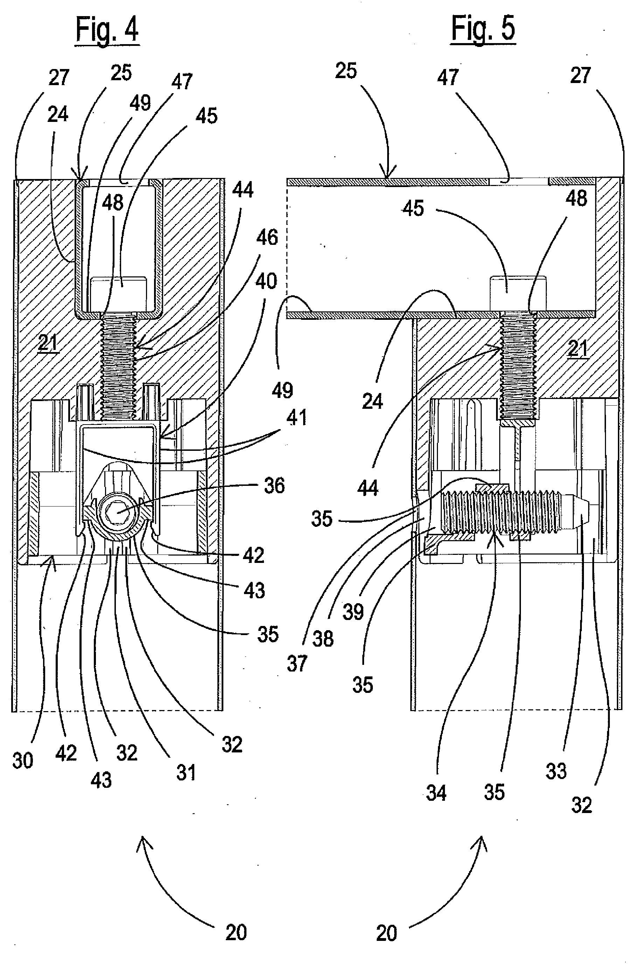

The expansion of the casing 28 is effected, for example, by means of an expansion ring 30, inserted and positioned inside the seat 23 (figures 4 and 5).

Said ring 30 is split along a generatrix, as in 31, in correspondence with opposite wedge-shaped sloping planes 32, between which the tip 33 of an activation screw 34 is inserted, capable of divaricating the ring 30 itself.

As can be clearly seen in figures 4 and 5, said screw 34 is screwed through a corresponding threaded seat, defined by opposite and offset curved sections 35 of the ring 30.

Said screw 34, at the opposite end with respect to the tip 33, has a shaped seat 36 for a maneuvering tool. Said seat 36 is accessible through aligned openings 37, 38, 39 respectively positioned in the leg 27, in the casing 28 and in the ring 30.

The ring 30 is firmly positioned inside the seat 23 by means of a connection 40 which integrally protrudes from the body 21 and connects the ring 30 itself by means of opposing arms 41 with end teeth 42 which are click-engaged with undercuts 43.

An expansion system of this kind is described, for example, in European patent EP1279353.

Components 30 and 34 form the above-mentioned second fixing means.

The functioning of the joining system according to the invention is evident from what is described above with reference to figures 1-5 and is briefly the following.

A joining system 20 complete with a body 21 and an expansion ring 30, is integrally fixed to the end of each shank 25 (four of which are shown in the example) of the structure 26, with the casing 28 in a non-expanded condition, and therefore with the expandable ring 30 in a rest condition, i.e. with the tip 33 of the activation screw 34 not wedged between the opposite wedge-shaped walls 32.

The shank 25 can therefore be housed in the corresponding seat 24 of the body 21 and fixed therein by means of a screw 44 with a manoeuvring head 45, as clearly shown in figures 4 and 5 of the drawings.

More specifically, said screw 44 is screwed into a corresponding threaded seat 46 of the body 21, passing through holes 47, 48 of the shank 25, and the head 45, in a fixing position, and is buffered against the lower side 49 of the shank 25 itself, which in turn is firmly buffered against the bottom of the seat 24.

The components 44 and 45 form the above-mentioned first fixing means.

After stably assembling the joining system 20 on the shanks 25 of the structure 26, the relative legs 27 can be easily and rapidly fixed to the same systems 20.

For this purpose, the body 21 is inserted at the top of the metal leg 27, having a corresponding tubular structure, and blocked therein by acting on the screw 34 with a consequent expansion of the ring 30 and casing 28. The casing 28, on expanding, is consequently firmly blocked against the inner surface of the leg 27, making the whole system rigid.

As can be clearly seen from the drawings, a window 50 is positioned at the top of the leg 27, having a section corresponding to that of the shaft 25, so as to allow its passage.

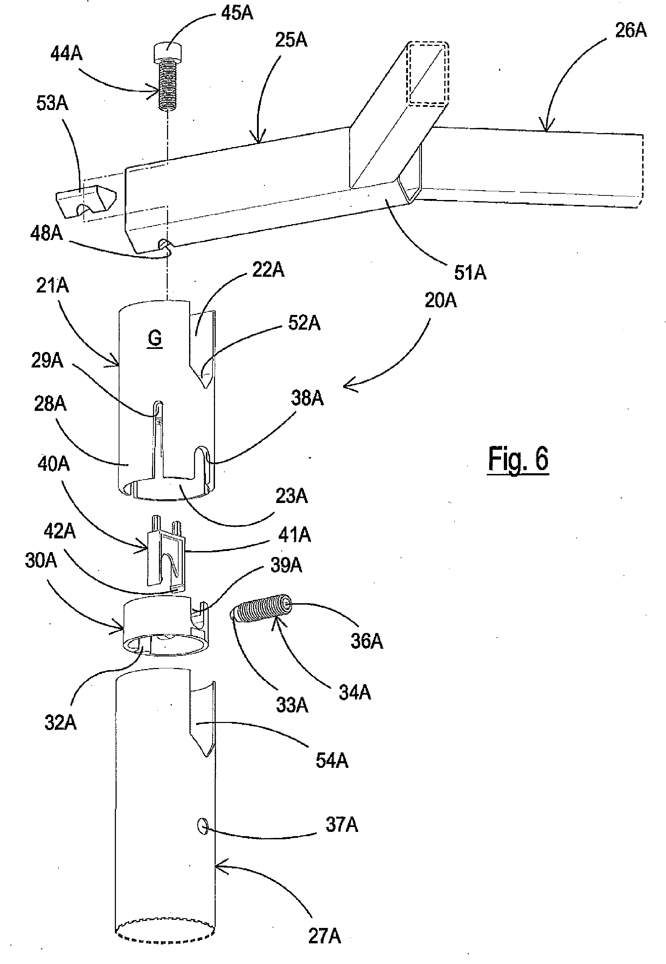

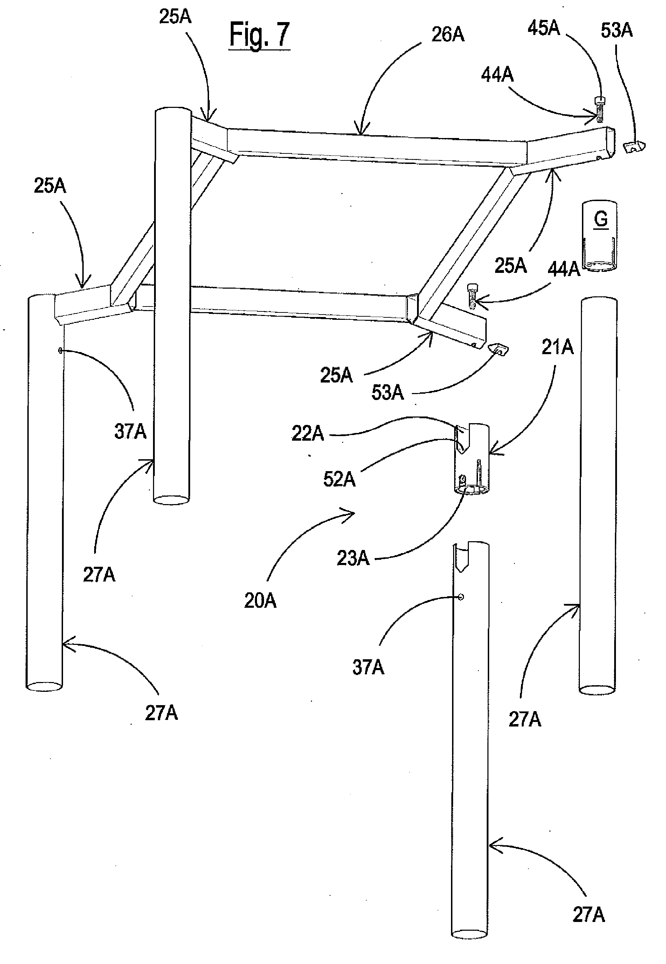

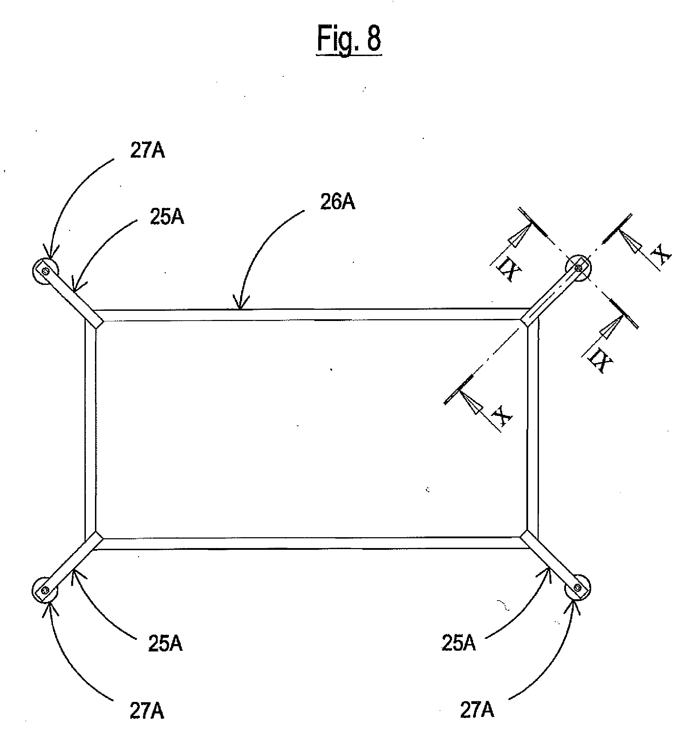

Figures 6-10 of the drawings illustrate a second embodiment of the invention in which the same and/or equivalent components to those of the first embodiment illustrated in figures 1-5, are indicated with the same reference numbers, but with the addition of the letter A.

As can be clearly seen from the drawings, this second embodiment of the invention differs from the first embodiment only in the particular section of the shank 25A and relative cradle seat 24A of the body 21A of the joining system 20A.

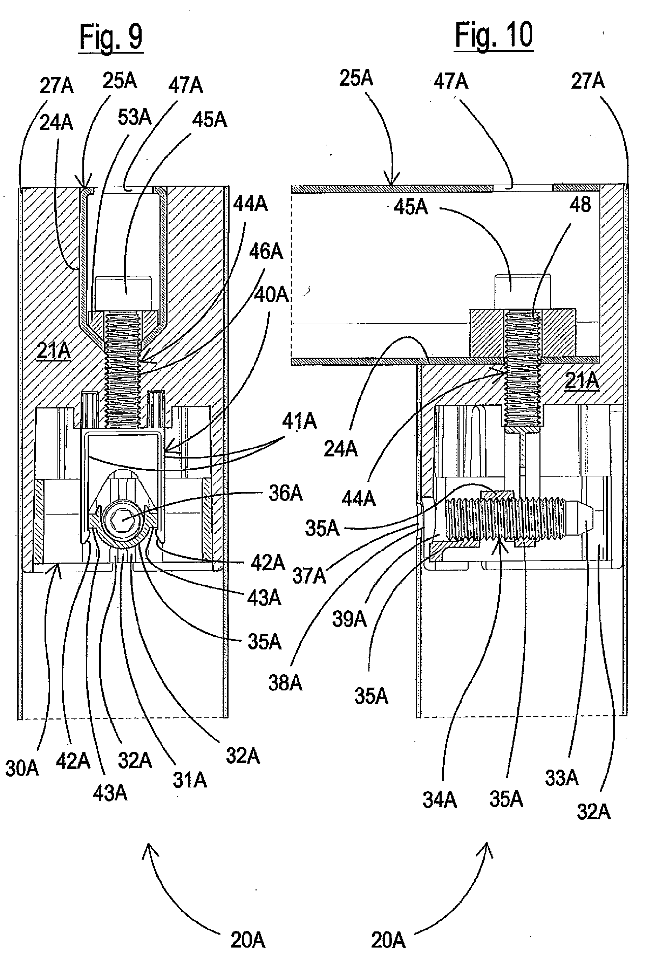

More specifically, said shank 25A has a triangular wedge-shaped section 51A which is coupled in a corresponding seat 52A of the body 21A. For fixing, the head 45A of the screw 44A is buffered against an abutment element 53A positioned inside the section 51A (figures 9 and 10).

A window 54A, having a section corresponding to that of the shank 25A-51A, is naturally positioned at the top of the leg 27A.

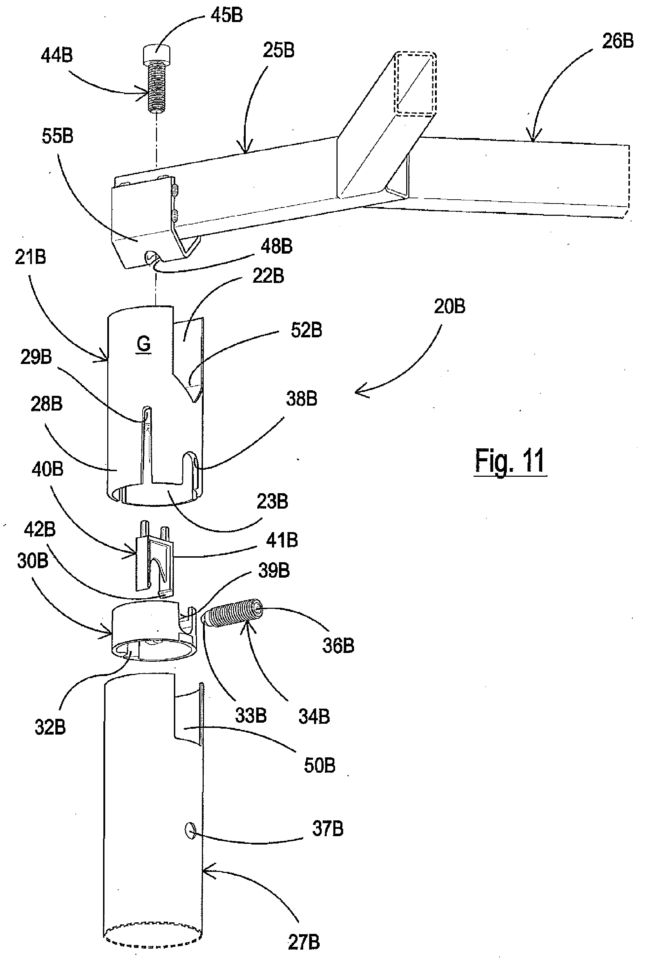

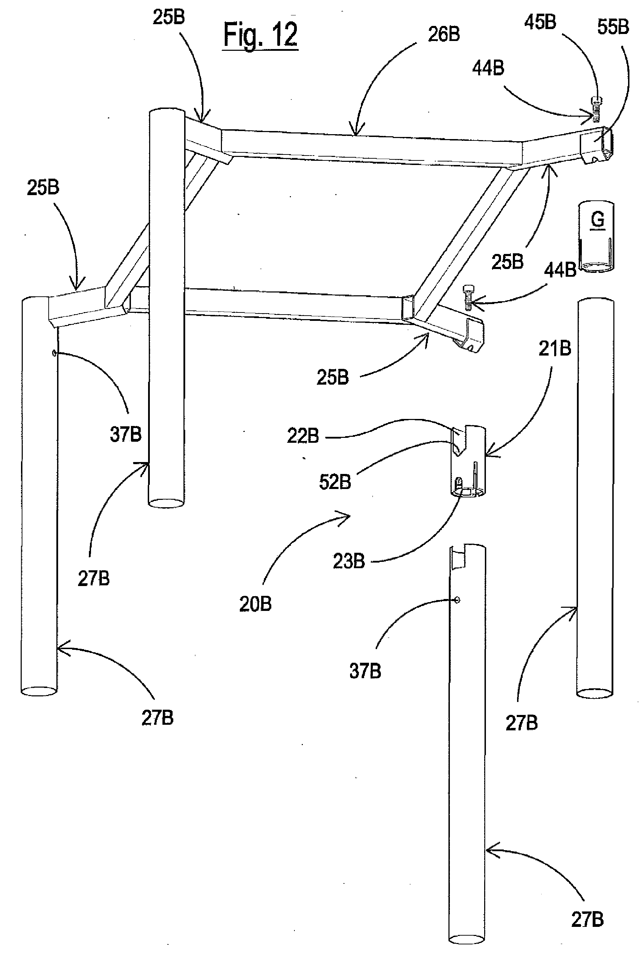

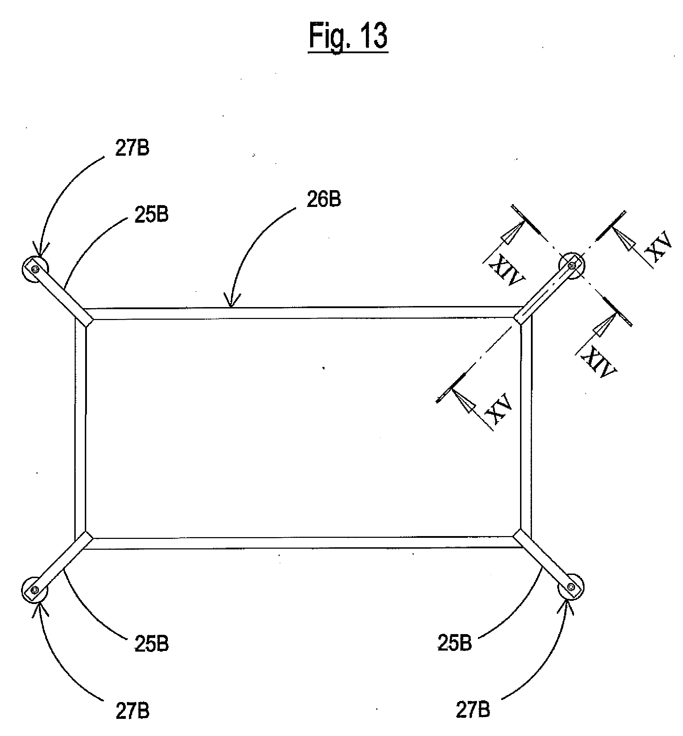

Figures 11-15 of the drawings illustrate a third embodiment of the invention in which the same and/or equivalent components to those of the first and second embodiments, illustrated in figures 1-5 and 6-10 of the drawings, respectively, are indicated with the same reference numbers, but with the addition of the letter B.

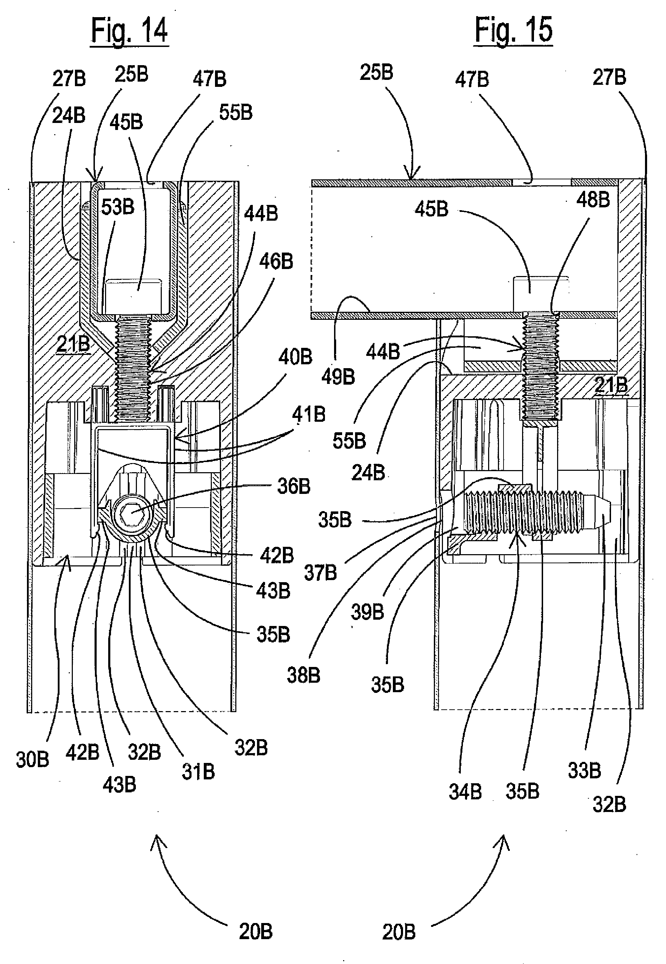

As can be clearly seen from the drawings, this third embodiment of the invention differs from the first two embodiments in the presence of a wedge-shaped element 55B fixed, for example by welding, to the free end of the shank 25B. Said element exerts the same function as the triangular section 51A, but does not require the presence of the element 53A, as the head 45B of the screw 44B is abutted and tightened directly against the lower side 49B of the shank 25B (figures 14 and 15).

The second and third embodiment of the invention have the advantage, thanks to the engagement between the wedge-shaped triangular sections 51A and 55B and the respective seats 52A and 52B, of automatically recovering possible dimensional tolerances of the components involved in the stable coupling.

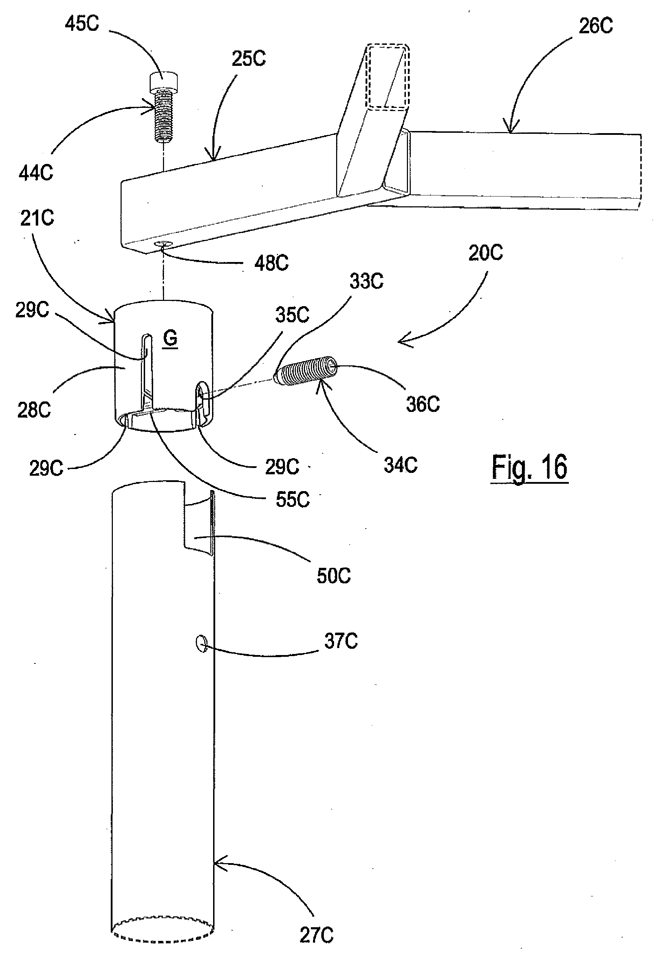

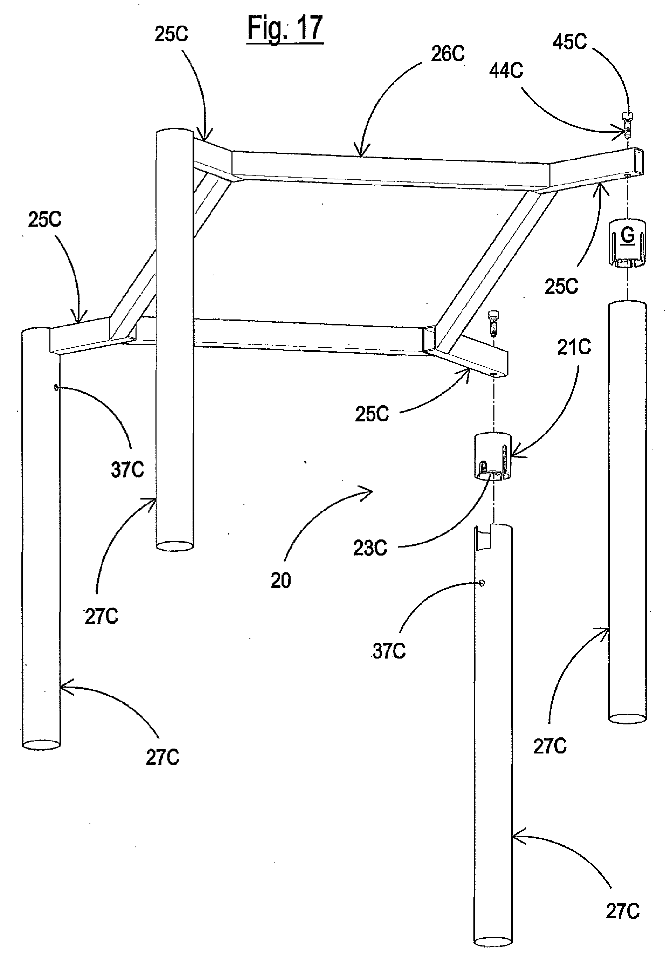

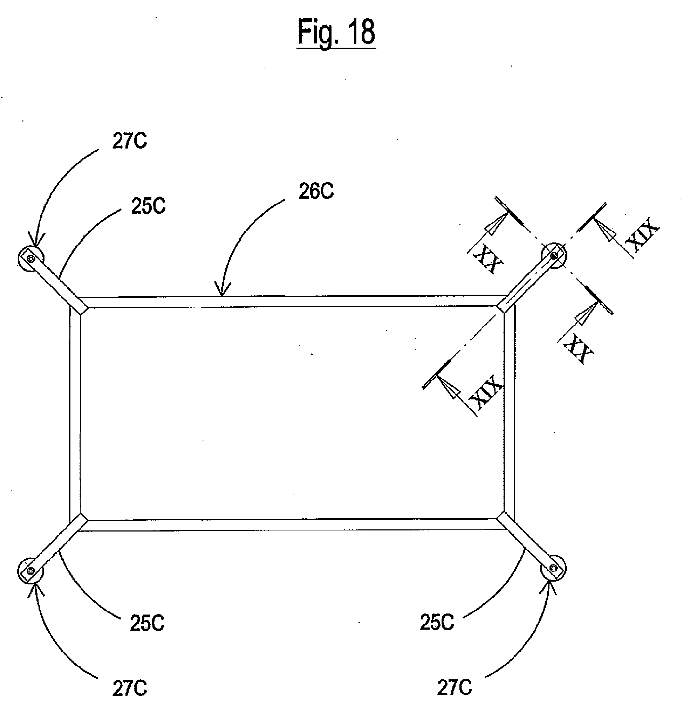

Figures 16-20 of the drawings illustrate a fourth embodiment of the invention, in which the same and/or equivalent components to those of the first three embodiments, are indicated with the same reference numbers, but with the addition of the letter C.

As can be clearly seen from the drawings, this fourth embodiment of the invention differs in the expansion means of the expandable casing 28C, which, instead of comprising an expansion ring 30, 30A, 30B positioned inside the casing 28C, are incorporated in the same casing 28C.

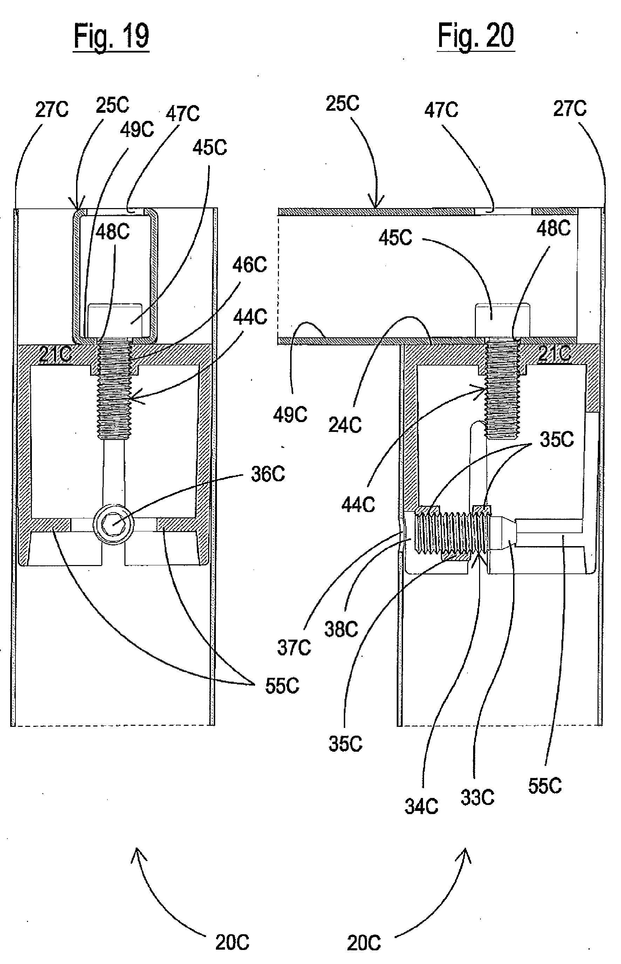

More specifically, as can be clearly seen in figures 19 and 20, the expandable casing 28C comprises, in its interior, seats 35C for the screw 34C whose tip 33C directly divaricates the casing 28C by acting on the notches 29C through a horizontal connection 55C. An expansion system of this kind is described, for example, in European patent EP0972466.

Another difference lies in the lack of the upper or top section 22, 22A, 22B, in the joining element G. In this embodiment of the invention, in fact, the shank 25C rests on the top of the joining element G as it is surrounded by the top terminal portion of the legs 27C, as can be clearly seen in figures 19, 20 of the drawings, instead of the section 22, 22A, 22B of the joining element G.

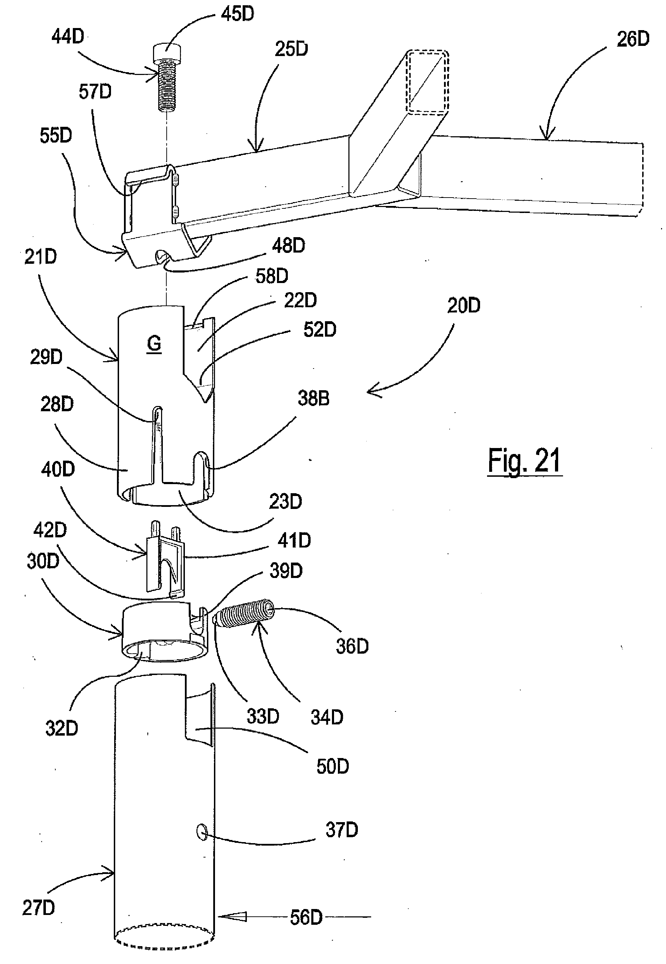

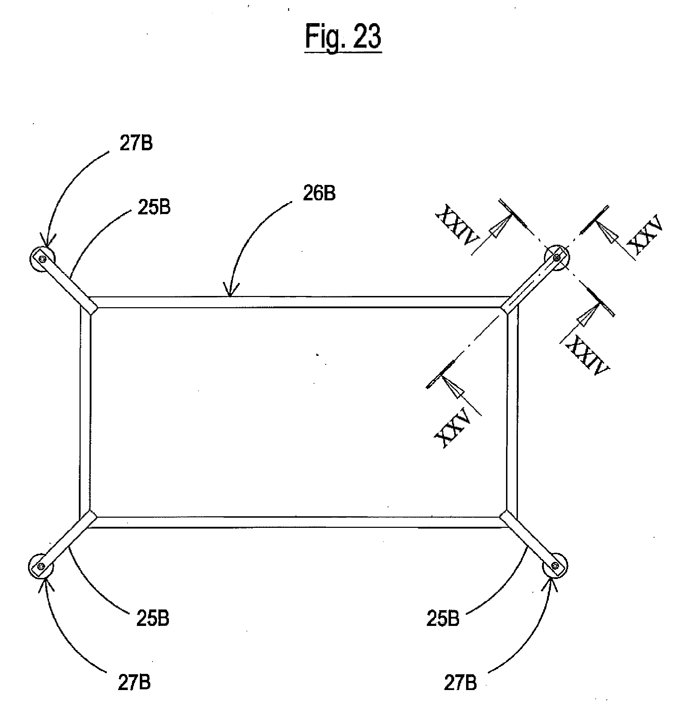

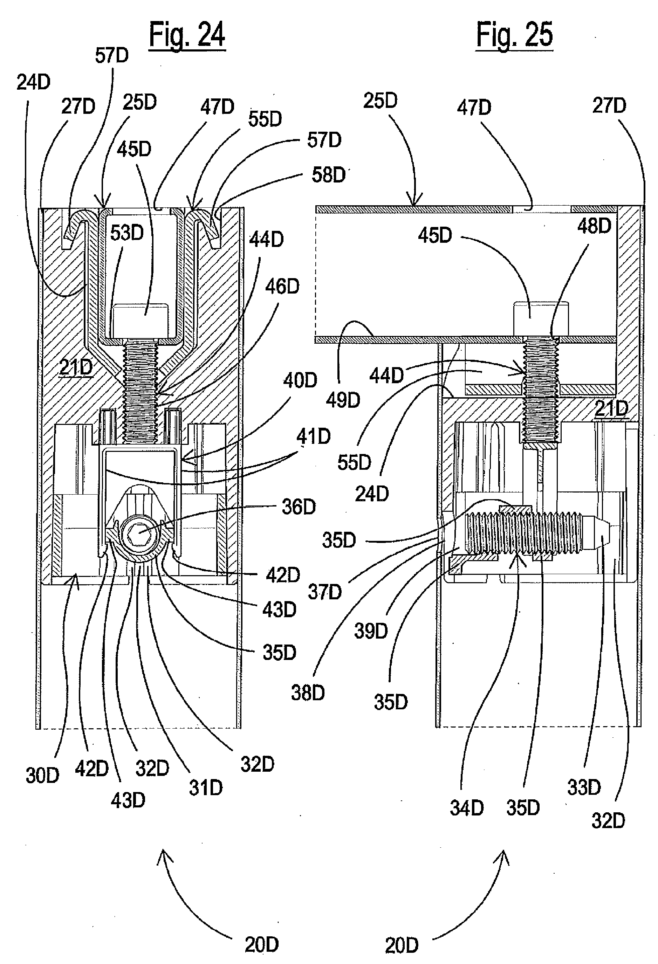

Figures 21-25 of the drawings illustrate a fifth embodiment of the invention, in which the same and/or equivalent components to those of the first four embodiments are indicated with the same reference number, but with the addition of the letter D.

As can be clearly seen in the drawings, this fifth embodiment of the invention differs from the third embodiment illustrated in figures 11-15 in the particular configuration of the wedge-shaped element 55D.

It has, in fact, been observed that, due to the presence of painting on the facing surfaces of the various components of the joining system - painting which can have various thicknesses -, a clearance or tolerance X must be inserted between the facing surfaces of the joining element G and the wedge-shaped element 55D, so that they can be easily intercoupled.

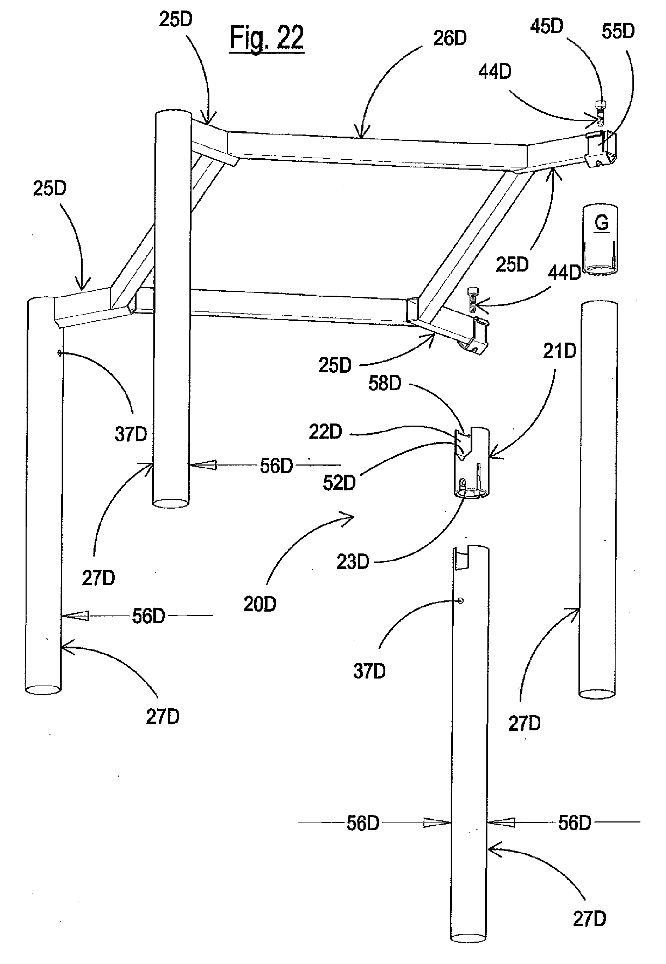

The presence of this clearance X, however, if the legs of the structure are subjected to stress by significant radial forces in the direction of the arrows 56D (figures 21, 22), may make the joining system unstable, modifying the relative position between the joining element G and the shank 25D.

This drawback is overcome by the particular shape of the wedge-shaped element 55D, which has oblique flaps 57D at the top, outward and downward, which are engaged in corresponding seats 58D of the joining element G.

In this way, when the screw 44D is tightened, thanks to the action of the element 55D, the flap 57D, and therefore the shank 25D, are firmly blocked to the joining element G, and consequently to the leg 27D, also in the presence of direct radial forces in the direction of the arrow 56D, against the same leg 27D.

A joining system for the production of a tubular frame structure with legs for supporting planes, has thus been created, which is economical to produce, simple and rapid to assemble, and with a minimum encumbrance.

If desired, the joining system 20,20A-C can, for example, be pre-assembled on the tubular frame structure and the legs can be connected on site to the joining system to produce a table or desk.

The objectives mentioned in the preamble of the description have therefore been achieved.

The protection of the invention is defined by the following claims.

## Claims

1. A joining system (20,20A-D) and a tubular frame structure (26,26A-D) having legs (27,27A-D) said joining system (20,20A-D) comprising, in combination: a joining element (G) for interconnecting said structure (26,26A-D) with said legs (27,27A-D) on its turn comprising first (44,44A-D;45,45A-D) and second (30,30A-B;34,34A-D) connecting and fixing means on said joining element (G), said joining element (G) and said first and second connecting and fixing means are substantially completely contained inside said leg (27,27A-D), at the top of the same, and said structure (26,26A-D) being fixed to said joining element (G) by means of said first connecting and fixing means, whereas said leg (27,27A-D) is fixed to said joining element (G) by means of said second fixing means, **characterized in that** said joining element (G) comprising, in a working position, an upper section, or summit (22,22A-B), which defines a cradle seat (24,24A-B) receiving a shank (25-25A-B), having a corresponding section, of said tubular metal frame structure (26,26A-B) with legs (27,27A-B).

2. The joining system (20,20A-D) according to claim 1, **characterized in that** said joining element (G) has, at its top in a working position, a cradle seat (52A, 52B) receiving a corresponding section (51A,55B) of said structure (26A,26B).

3. The joining system according to claim 2, **characterized in that** said section (51A) is directly positioned on said structure (26A).

4. The joining system according to claim 2, **characterized in that** said section (55B) consists of a wedge-shaped element (55B,55D) positioned on said structure (26B,26D).

5. The joining system according to claim 1, **characterized in that** said first connecting and fixing means consist of a screw (44,44A-C) with a head (45,45A-D), said screw (44,44A-D) connecting and fixing said section (25,25A-D;51A,55B) and said joining element (G) to each other.

6. The joining system according to claim 5, **characterized in that** said second connecting and fixing means (30,30A-B;34,34A-D) consist of an expansion ring (30,30A-B) that, when expanded, causes the expansion of said element (G) against the inner surface of the leg (27, 27A-D) inside which the element (G) is inserted.

7. The joining system according to claim 1, **characterized in that** said joining element (G) has a substantially cylindrical or polygonal body (21,21A-D), with two upper and lower hollow sections (22,22A-B;23,23A-D) respectively, said sections (22,22A-B;23,23A-D) respectively receive said first and second fixing means of the joining element (G) at a shank (25-25A-D) of said frame structure (26,26A-D) and at a leg (27,27A-D).

8. The joining system according to claim 1, **characterized in that** said joining element (G) comprises a lower section (23,23A-D) consisting of a cylindrical or polygonal casing (28,28A-D) which can be expanded thanks to the presence of notches (29,29A-D) along generatrices.

9. The joining system according to claim 8, **characterized in that** the expansion of the casing (28,28A-B) is effected by means of an expansion ring (30,30A-B) inserted inside a seat of the lower hollow sections (23,23A-B).

10. The joining system according to claim 9, **characterized in that** said ring (30,30A-B) is split along one generatrix, as in (31,31A-B), in correspondence with opposite wedge-shaped sloping planes (32,32A-B) between which the tip (33,33A-B) of an activation screw (34,34A-B) is inserted, for divaricating the same ring (30,30A-B) .

11. The joining system according to claim 10, **characterized in that** said screw (34,34A-B) is screwed through a corresponding threaded seat, defined by opposite and offset curved sections (35,35A-B) of the ring (30,30A,30B).

12. The joining system according to claim 11, **characterized in that** said screw (34,34A-B), at the opposite end with respect to the tip (33,33A-B), has a shaped seat (36,36A-B) for a manoeuvring tool, said seat (36,36A-B) being accessible through aligned openings (37,37A-B;38,38A-B;39,39A-B) respectively positioned in the leg (27-27A-B), in the casing (28,28A-C) and in the ring (30,30A,30B).

13. The joining system according to claim 10, **characterized in that** said ring (30, 30A, 30B) is stably positioned inside the seat of the lower hollow sections (23,23A,23B) by means of a connection (40,40A,40B) which integrally protrudes from the body (21,21A,21B) and connects the ring (30,30A,30B) by means of arms (41,41A,41B) with end teeth (42,42A,42B) which are click-engaged with undercuts (43,43A,43B).

14. The joining system according to any of the previous claims, **characterized in that** said tubular frame structure (26,26A-D) is surrounded by the joining element (G).

15. The joining system according to any of the previous claims, **characterized in that** said tubular frame structure (26,26A-D) is surrounded by the top of the leg (27-27A-D).

16. The joining system according to claim 4, **characterized in that** said wedge-shaped element (55D), has, at its top in a working position, oblique flaps (57D), outwards and downwards, who engage in corresponding seats (58D) of the joining element (G).

17. A supporting plane comprising a tubular frame structure (26,26A-D) and a joining (G) system as claimed in any of the previous claims.

## Patentansprüche

1. Verbindungssystem (20, 20A-D) und rohrförmige Rahmenstruktur (26, 26A-D) mit Beinen (27, 27A-D), wobei das Verbindungssystem (20, 20A-D) in Kombination umfasst: ein Verbindungselement (G) zum Verbinden der Struktur (26, 26A-D) mit den Beinen (27, 27A-D), die wiederum erste (44, 44A-D; 45, 45A-D) und zweite (30, 30A-B; 34, 34A-D) Anschluss- und Befestigungsmittel an dem Verbindungselement (G) umfassen, wobei das Verbindungselement (G) und die ersten und zweiten Anschluss- und Befestigungsmittel im Wesentlichen vollständig in dem Bein (27, 27A-D) an dessen Oberteil enthalten sind, und die Struktur (26, 26A-D) an dem Verbindungselement (G) mittels der ersten Anschluss- und Befestigungsmittel befestigt ist, wohingegen das Bein (27, 27A-D) an dem Verbindungselement (G) mittels der zweiten Befestigungsmittel befestigt ist,
**dadurch gekennzeichnet, dass**
das Verbindungselement (G) in einer Arbeitsposition ein oberes Teilstück, oder einen Scheitel (22, 22A-B) umfasst, der einen Wiegensitz (24, 24A-B) definiert, der einen Schaft (25-25A-25B) mit einem entsprechenden Teilstück der rohrförmigen Metallrahmenstruktur (26, 26A-B) mit Beinen (27, 27A-B) aufnimmt.

2. Verbindungssystem (20, 20A-D) nach Anspruch 1, **dadurch gekennzeichnet, dass** das Verbindungselement (G) an seinem Oberteil in einer Arbeitsposition einen Wiegensitz (52A, 52B) aufweist, der ein entsprechendes Teilstück (51A, 55B) der Struktur (26A, 26B) aufnimmt.

3. Verbindungssystem nach Anspruch 2, **dadurch gekennzeichnet**, das das Teilstück (51A) direkt an der Struktur (26A) positioniert ist.

4. Verbindungssystem nach Anspruch 2, **dadurch gekennzeichnet, dass** das Teilstück (55B) aus einem keilförmigen Element (55B, 55D) besteht, dass an der Struktur (26B, 26D) positioniert ist.

5. Verbindungssystem nach Anspruch 1, **dadurch gekennzeichnet, dass** die ersten Anschluss- und Befestigungsmittel aus einer Schraube (44, 44A-C) mit einem Kopf (45, 45A-D) bestehen, wobei die Schraube (44, 44A-D) das Teilstück (25, 25A-D; 51A, 55B) und das Verbindungselement (G) aneinander anschließt und befestigt.

6. Verbindungssystem nach Anspruch 5, **dadurch gekennzeichnet, dass** die zweiten Anschluss- und Befestigungsmittel (30, 30A-B; 34, 34A-D) aus einem Ausdehnungsring (30, 30A-B) bestehen, der, wenn er ausgedehnt ist, die Ausdehnung des Elements (G) gegen die Innenfläche des Beins (27, 27A-D), in das das Element (G) eingesetzt ist, bewirkt.

7. Verbindungssystem nach Anspruch 1, **dadurch gekennzeichnet, dass** das Verbindungselement (G) einen im Wesentlichen zylindrischen oder polygonalen Körper (21, 21A-D) mit zwei oberen bzw. unteren hohlen Teilstücken (22, 22A-B; 23, 23A-D) aufweist, wobei die Teilstücke (22, 22A-B; 23, 23A-D) jeweils das erste und zweite Befestigungsmittel des Verbindungselements (G) an einem Schaft (25-25A-D) der Rahmenstruktur (26, 26A-D) und an einem Bein (27, 27A-D) aufnehmen.

8. Verbindungssystem nach Anspruch 1, **dadurch gekennzeichnet, dass** das Verbindungselement (G) ein unteres Teilstück (23, 23A-D) umfasst, das aus einem zylindrischen oder polygonalen Gehäuse (28, 28A-D) besteht, das sich aufgrund des Vorhandenseins von Kerben (29, 29A-D) entlang von Erzeugenden ausgedehnt werden kann.

9. Verbindungssystem nach Anspruch 8, **dadurch gekennzeichnet, dass** die Ausdehnung des Gehäuses (28, 28A-B) mittels eines Ausdehnungsrings (30, 30A-B) bewirkt wird, der in einen Sitz der unteren hohlen Teilstücke (23, 23A-B) eingesetzt ist.

10. Verbindungssystem nach Anspruch 9, **dadurch gekennzeichnet, dass** der Ring (30, 30A-B) entlang einer Erzeugenden wie in (31, 31A-B) in Übereinstimmung mit gegenüberliegenden, keilförmigen schrägen Ebenen (32, 32A-B), zwischen welchen die Spitze (33, 33A-B) einer Betätigungsschraube (34, 34A-B) zum Spreizen selbigen Rings (30, 30A-B) aufgenommen ist, geteilt ist.

11. Verbindungssystem nach Anspruch 10, **dadurch gekennzeichnet, dass** die Schraube (34, 34A-B) durch einen entsprechenden Gewindesitz geschraubt ist, der durch gegenüberliegende und versetzte gekrümmte Teilstücke (35, 35A-B) des Rings (30, 30A, 30B) definiert ist.

12. Verbindungssystem nach Anspruch 11, **dadurch gekennzeichnet, dass** die Schraube (34, 34A-B) an dem entgegengesetzten Ende mit Bezug auf die Spitze (33, 33A-B) einen geformten Sitz (36, 36A-B) für ein Steuerwerkzeug aufweist, wobei der Sitz (36, 36A-B) durch ausgerichtete Öffnungen (37, 37A-B; 38, 38A-B; 39, 39A-B) zugänglich ist, die jeweils in dem Bein (27-27A-B) in dem Gehäuse (28, 28A-C) und in dem Ring (30, 30A, 30B) positioniert sind.

13. Verbindungssystem nach Anspruch 10, **dadurch gekennzeichnet, dass** der Ring (30, 30A, 30B) stabil in dem Sitz der unteren hohlen Teilstücke (23, 23A, 23B) mittels einer Verbindung (40, 40A, 40B) positioniert ist, die einstückig von dem Körper (21, 21A, 21 B) vorsteht und den Ring (30, 30A, 30B) mittels Armen (41, 41A, 41B) mit Endzähnen (42, 42A, 42B) verbindet, die mit Hinterschnitten (43, 43A, 43B) verrastet sind.

14. Verbindungssystem nach einem der vorhergehenden Ansprüche, **dadurch gekennzeichnet, dass** die rohrförmige Rahmenstruktur (26, 26A-D) von dem Verbindungselement (G) umgeben ist.

15. Verbindungssystem nach einem der vorhergehenden Ansprüche, **dadurch gekennzeichnet, dass** die rohrförmige Rahmenstruktur (26, 26A-D) von dem Oberteil des Beins (27-27A-D) umgeben ist.

16. Verbindungssystem nach Anspruch 4, **dadurch gekennzeichnet, dass** das keilförmige Element (55D) an seinem Oberteil in einer Arbeitsposition schräge Lappen (57D) nach außen und nach unten hin aufweist, die in entsprechenden Sitzen (58D) des Verbindungselements (G) in Eingriff stehen.

17. Tragebene, die eine rohrförmige Rahmenstruktur (26, 26A-D) und ein Verbindungssystem (G) nach einem der vorhergehenden Ansprüche umfasst.

## Revendications

1. Système d'assemblage (20, 20A-D) et structure de cadre tubulaire (26, 26A-D) ayant des pieds (27, 27A-D), ledit système d'assemblage (20, 20A-D) comportant, en combinaison : un élément d'assemblage (G) pour relier entre eux ladite structure (26, 26A-D) et lesdits pieds (27, 27A-D), lui-même comprenant des premiers (44, 44A-D ; 45, 45A-D) et des seconds (30, 30A-B ; 34, 34A-D) moyens de montage et de fixation sur ledit élément d'assemblage (G), ledit élément d'assemblage (G) et lesdits premiers et seconds moyens de montage et de fixation étant sensiblement entièrement contenus à l'intérieur dudit pied (27, 27A-D), dans le haut de celui-ci, et ladite structure (26, 26A-D) étant fixée audit élément d'assemblage (G) à l'aide desdits premiers moyens de montage et de fixation., tandis que ledit pied (27, 27A-D) est fixé audit élément d'assemblage (G) à l'aide desdits seconds moyens de fixation, **caractérisé en ce que** ledit élément d'assemblage (G) comprend, en position d'utilisation, une partie supérieure, ou sommet (22, 22A-B), qui définit un logement formant berceau (24, 24A-B) recevant un tube (25-25A-B), à section correspondante, de ladite structure de cadre métallique tubulaire (26, 26A-B) à pieds (27, 27A-B).

2. Système d'assemblage (20, 20A-D) selon la revendication 1, **caractérisé en ce que** ledit élément d'assemblage (G) a, dans le haut de celui-ci en position d'utilisation, un logement formant berceau (52A, 52B) recevant une partie correspondante (51A, 55B) de ladite structure (26A, 26B)..

3. Système d'assemblage selon la revendication 2, **caractérisé en ce que** ladite partie (51A) est placée directement sur ladite structure (26A).

4. Système d'assemblage selon la revendication 2, **caractérisé en ce que** ladite partie (55B) consiste en un élément cunéiforme (55B, 55D) placé sur ladite structure (26B, 26D).

5. Système d'assemblage selon la revendication 1, **caractérisé en ce que** lesdits premiers moyens de montage et de fixation consistent en une vis (44, 44A-C) avec une tête (45, 45A-D), ladite vis reliant et fixant l'un à l'autre ladite partie (25, 25A-D ; 51A, 51B) et ledit élément d'assemblage (G).

6. Système d'assemblage selon la revendication 5, **caractérisé en ce que** lesdits seconds moyens de montage et de fixation (30, 30A-B ; 34-34A-D) consistent en une bague à déploiement (30, 30A-B) qui, lorsqu'elle est déployée, provoque un déploiement dudit élément (G) contre la surface intérieure du pied (27, 27A-D) à l'intérieur duquel est inséré l'élément (G).

7. Système d'assemblage selon la revendication 1, **caractérisé en ce que** ledit élément d'assemblage (G) a un corps sensiblement cylindrique ou polygonal (21, 21A-D), avec deux parties supérieure et inférieure creuses, respectivement (22, 22A-B ; 23, 23A-D), lesdites parties (22, 22A-B ; 23, 23A-D) reçoivent respectivement lesdits premier et second moyens de fixation de l'élément d'assemblage (G) sur un tube (25, 25A-D) de ladite structure de cadre (26, 26A-D) et sur un pied (27, 27A-D).

8. Système d'assemblage selon la revendication 1, **caractérisé en ce que** ledit élément d'assemblage (G) comprend une partie inférieure (23, 23A-D) consistant en une jupe cylindrique ou polygonale (28, 28A-D) qui peut être déployée grâce à la présence d'encoches (29, 29A-D) le long de génératrices.

9. Système d'assemblage selon la revendication 8, **caractérisé en ce que** le déploiement de la jupe (28, 28A-D) s'effectue à l'aide d'une bague de déploiement (30, 30A-B) insérée à l'intérieur d'un logement des parties inférieures creuses (23, 23A-B).

10. Système d'assemblage selon la revendication 9, **caractérisé en ce que** ladite bague (30, 30A-B) est fendue le long d'une génératrice, comme en (31, 31A-B), en regard de plans opposés cunéiformes obliques (32, 32A-B) entre lesquels le bout (33, 33A-B) d'une vis d'activation (34, 34A-B) est inséré pour ouvrir ladite bague (30, 30A-B).

11. Système d'assemblage selon la revendication 10, **caractérisé en ce que** ladite vis (34, 34A-B) est vissée à travers un logement fileté correspondant, défini par des parties courbes opposées et décalées (35, 35A-B) de la bague (30, 30A, 30B).

12. Système d'assemblage selon la revendication 11, **caractérisé en ce que** ladite vis (34, 34A-B), à l'extrémité opposée par rapport au bout (33, 33A-B), a un logement profilé (36, 36A-B) pour un outil de manoeuvre, ledit logement (36, 36A-B) étant accessible à travers des ouvertures alignées (37, 37A-B ; 38-38A-B ; 39, 39A-B) respectivement ménagées dans le pied (27-27A-B), dans la jupe (28, 28A-C) et dans la bague (30, 30A, 30B).

13. Système d'assemblage selon la revendication 10, **caractérisé en ce que** ladite bague (30, 30A, 30B) est placée d'une manière stable à l'intérieur du logement des parties inférieures creuses (23, 23A, 23B) à l'aide d'un raccord (40, 40A, 40B) qui fait saillie solidairement depuis le corps (21, 21A, 21B) et accouple la bague (30, 30A, 30B) à l'aide de branches (41, 41A, 41B) aves des dents (42, 42A, 42B) d'extrémités encliquetées dans des évidements (43, 43A, 43B).

14. Système d'assemblage selon l'une quelconque des revendications précédentes, **caractérisé en ce que** ladite structure de cadre tubulaire (26, 26A-D) est entourée par l'élément d'assemblage (G).

15. Système d'assemblage selon l'une quelconque des revendications précédentes, **caractérisé en ce que** ladite structure de cadre tubulaire (26, 26A-D) est entourée par le haut du pied (27, 27A-D).

16. Système d'assemblage selon la revendication 4, **caractérisé en ce que** ledit élément cunéiforme (55D) possède, dans le haut de celui-ci en position d'utilisation, des pans obliques (57D) orientés vers l'extérieur et vers le bas, qui s'engagent dans des logements correspondants (58D) de l'élément d'assemblage (G).

17. Plan de support comportant une structure de cadre tubulaire (26, 26AD) et un système d'assemblage (G) selon l'une quelconque des revendications précédentes.
